(19) Europäisches Patentamt
European Patent Office
Office européen des brevets

(11) **EP 1 316 464 B1**

(12) **EUROPEAN PATENT SPECIFICATION**

(45) Date of publication and mention
of the grant of the patent:
**09.05.2018 Bulletin 2018/19**

(51) Int Cl.:
***B60L 7/18*** *(2006.01)*    ***B60K 31/04*** *(2006.01)*
***B60L 7/26*** *(2006.01)*

(21) Application number: **02023211.2**

(22) Date of filing: **16.10.2002**

(54) **Control of regenerative braking**

Regelung des regenerativen Bremsens

Régulation de freinage à récuperation

(84) Designated Contracting States:
**DE FR GB**

(30) Priority: **29.11.2001 JP 2001363709**

(43) Date of publication of application:
**04.06.2003 Bulletin 2003/23**

(73) Proprietor: **NISSAN MOTOR CO., LTD.**
**Yokohama-shi,**
**Kanagawa 221-0023 (JP)**

(72) Inventor: **Uchida, Masaaki**
**Yokosuka-shi,**
**Kanagawa (JP)**

(74) Representative: **Hoefer & Partner Patentanwälte**
**mbB**
**Pilgersheimer Straße 20**
**81543 München (DE)**

(56) References cited:
**EP-A- 1 010 569    JP-A- 4 185 210**
**JP-A- 8 256 401    JP-A- 57 097 303**
**US-A- 5 615 933    US-A- 5 764 009**
**US-A- 6 122 588**

**Description**

FIELD OF THE INVENTION

This invention relates to the control of the drive force of a vehicle driven by an electric motor.

BACKGROUND OF THE INVENTION

Tokkai 2000-236602 published by the Japanese Patent Office in 2000 discloses a control algorithm used in the drive force control of a hybrid drive vehicle. The algorithm is used for calculating a target drive force based on the vehicle speed and the depression amount of an accelerator pedal and for controlling the output torque of a motor to coincide with the target drive force.

SUMMARY OF THE INVENTION

However the required drive force for level road surfaces takes a different value from that required for an inclined surface. Consequently a target drive force determined on the basis of the vehicle speed and the depression amount of the accelerator pedal will result in a deficit depending on the running conditions of the vehicle. For example, when an optimal target drive force for a level road surface is applied for a downward sloping road, insufficient energy is recovered by regenerative braking and this results in an increase in the vehicle speed which is unintended by the driver. Furthermore since energy is not sufficiently regenerated, energy efficiency is reduced.

Tokkai 9-100903 published by the Japanese Patent Office in 1998 discloses a control algorithm for controlling a vehicle drive force on a downward sloping road. This prior-art technique teaches to enhance the engine brake by increasing the speed ratio of the transmission in a state where the accelerator pedal is released.

The technique disclosed in Tokkai 9-100903 operates on the premise of a vehicle in which an engine drives the vehicle wheels via a transmission. Consequently this prior-art technique can not be applied to the drive force control of a vehicle driven by an electric motor without using a transmission.

Further, a control method according to the preamble portion of claim 1 is known from US 5,615,933 A.

It is therefore an object of this invention to realize a drive force control depending on the inclination of the road surface that can be applied to various kinds of vehicle drive systems.

In order to achieve the above object, this invention provides a control method and a control device according to the independent claims. The dependent claims contain advantageous embodiments of the present invention.

The details as well as other features and advantages of this invention are set forth in the remainder of the specification and are shown in the accompanying drawings.

BRIEF DESCRIPTION OF THE DRAWINGS

FIG. 1 is a schematic diagram of a drive force control device for a hybrid drive vehicle according to this invention.

FIG. 2 is a block diagram showing the function of a comprehensive control unit according to this invention.

FIG. 3 is a flowchart showing a routine for setting a target drive force correction basic value tFwC0 performed by the comprehensive control unit.

FIG. 4 is a diagram showing the characteristics of a map for the target drive force correction basic value tFwC0 stored in the comprehensive control unit.

FIG. 5 is a flowchart showing a subroutine for calculating a target drive force correction value *tFwC* performed by the comprehensive control unit.

FIG. 6 is a diagram showing a comparison of a target drive force set by the comprehensive control unit with the prior-art technique.

FIG. 7 is a flowchart showing a routine for setting a target drive force correction basic value *tFwC0* performed by a comprehensive control unit according to a second embodiment of this invention.

FIG. 8 is a diagram showing the characteristics of a map for a predetermined variation amount *tΔVSP* stored in the comprehensive control unit according to the second embodiment of this invention.

DESCRIPTION OF THE PREFERRED EMBODIMENTS

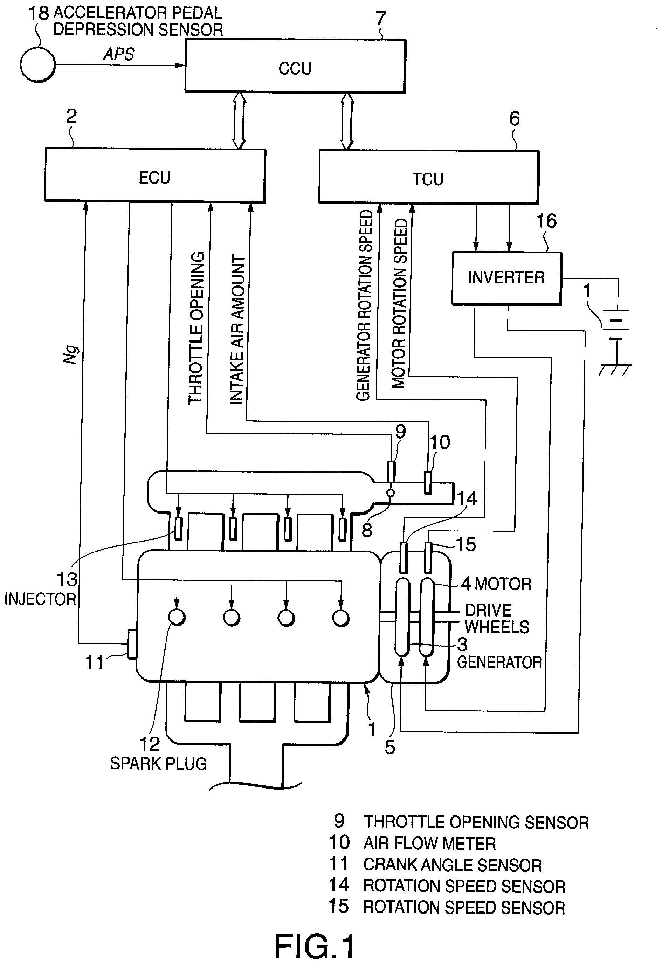

Referring to FIG. 1 of the drawings, a drive force control device according to this invention for a hybrid drive vehicle comprises an internal combustion engine 1 controlled by an engine control unit (ECU) 2, a transmission 5 controlled by a transmission control unit (TCU) 6 and a comprehensive control unit (CCU) 7 integrally controlling the ECU 2 and TCU 6.

The transmission 5 is provided with an electric motor 4 which is connected to the drive wheels of the vehicle and a generator 3 which is connected to the engine 1. The TCU 6 controls the drive current for the electric motor 4 and the power generation current of the generator 3 through an inverter 16. As a result, the transmission 5 functions as a continuously variable transmission which continuously varies a speed ratio. A battery 17 which is charged by the power generation current of the generator 3 is connected to the inverter 16.

The engine 1 injects gasoline fuel from a fuel injector 13 into air aspirated through an electronically-controlled throttle 8. As a result, the air-fuel mixture thereby produced is combusted by sparking a spark plug 12 and the energy of combustion is used to rotate the engine 1. The fuel injection amount and injection timing of the fuel injector 13 and the ignition timing of the spark plug 12 are respectively controlled by signals from the ECU 2.

The CCU 7 determines the control target values for the engine 1, the generator 3 and the motor 4 based on the operating conditions of the vehicle.

The ECU 2, TCU 6 and CCU 7 respectively comprise a microcomputer provided with a central processing unit (CPU), a read only memory (ROM), a random access memory (RAM) and an input/output interface (I/O interface). The ECU 2, TCU 6 and CCU 7 may comprise a single microcomputer.

In order to realize this control, the drive force control device is provided with a throttle opening sensor 9 detecting a throttle opening of the electronically-controlled throttle 8, an air flow meter 10 detecting an intake air amount of the engine 1 and a crank angle sensor 11 detecting the specific rotation position and the rotation speed *Ng* of the engine 1. Detected data from these sensors are input to the ECU 2 as signals.

The drive force control device is also provided with a rotation speed sensor 14 detecting the rotation speed of the generator 3 and a rotation speed sensor 15 detecting the rotation speed of the motor 4. Detected data from these sensors are respectively input to the TCU 6. Since the motor 4 drives the drive wheels directly, the rotation speed of the motor 4 normally displays a proportional relationship to the vehicle speed *VSP.* Thus the detection signal from the rotation speed sensor 15 is used as a vehicle speed signal.

The drive force control device is provided with an accelerator pedal depression amount sensor 18 detecting the depression amount *APS* of an accelerator pedal provided in the vehicle. The detected data from the accelerator pedal depression amount sensor 18 is input to the CCU 7 as a signal.

The CCU 7, ECU 2 and TCU 6 are interconnected by signal circuits in order to transmit data and target values therebetween.

The general concept of the control performed by the ECU 2, TCU 6 and CCU 7 will be described below.

The ECU 2 varies the opening of the electronically-controlled throttle 8 so that the intake air amount coincides with a target engine torque equivalence air amount which corresponds to the target output torque *tTe* for the engine 1. Although this invention is applied to a gasoline engine provided with an electronically-controlled throttle 8 in this embodiment, it is possible to also apply this invention to a diesel engine. When this invention is applied to a diesel engine, the ECU 2 controls the fuel injection amount of the fuel injector 13 instead of the throttle opening, based on an engine target output torque *tTe.*

The ECU 2 also determines the target ignition timing and the target fuel injection amount based on the intake air amount of the engine 1 detected by the air flow meter 9 and the engine rotation speed *Ng* detected by the crank angle sensor 11. An injection signal corresponding to the target fuel injection amount is output to the fuel injector 13 and an ignition signal corresponding to the target ignition timing is output to the spark plug 12.

The TCU 6 feedback controls the rotation speed of the generator 3 to a target generation rotation speed *tNg* through an inverter 16 based on the actual rotation speed of the generator 3 detected by the rotation speed sensor 14 and the target generator rotation speed *tNg.* Furthermore the TCU 6 performs open loop control of the motor 4 through the inverter 6 based on a target vehicle drive force *tFw.* When the target vehicle drive force *tFw* takes a negative value, the inverter 16 is controlled so that the motor 4 functions as a generator by regenerating the energy of the drive wheels. The regenerated energy of the motor 4 is used to charge the battery 17. It is possible to provide a capacitor in place of the battery 17.

The CCU 7 calculates the target vehicle drive force *tFw,* the target generator rotation speed *tNg* and the target engine drive force *tTe* used by the ECU 2 and the TCU 6.

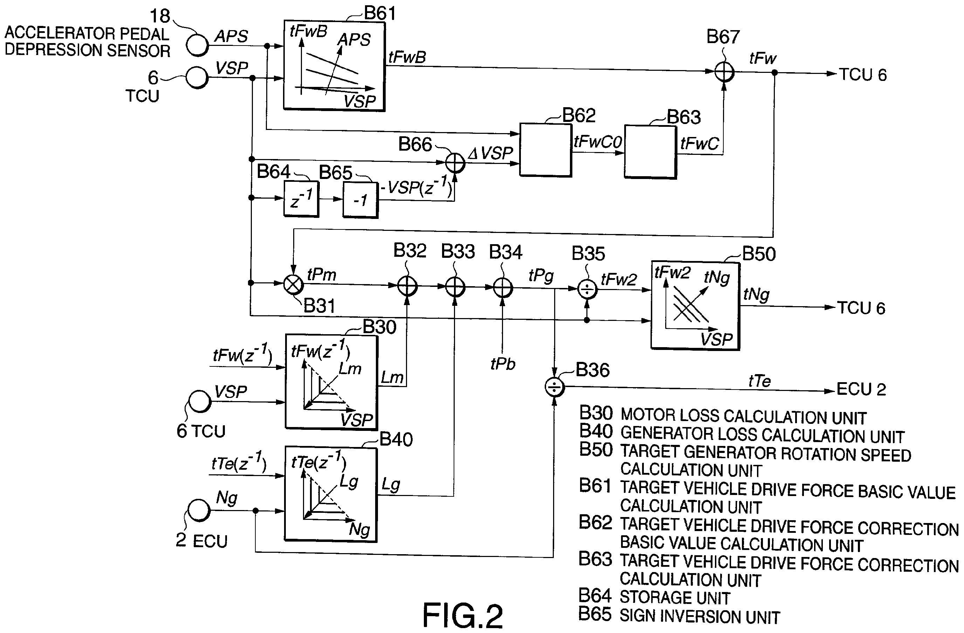

Referring to FIG. 2, the calculation operations performed by the CCU 7 will be described. However each unit shown in the figures corresponding to the functions of the CCU 7 are virtual units and do not have physical existence. The calculation performed in FIG. 2 is performed repeatedly at an interval of ten milliseconds while the vehicle is operating.

Referring to FIG. 2, the CCU 7 comprises a motor loss calculation unit B30, a generator loss calculation unit B40, a target generator rotation speed calculation unit B50, a target vehicle drive force basic value calculation unit B61, a target vehicle drive force correction basic value calculation unit B62, a target vehicle drive force correction calculation unit B63, a storage unit B64, a sign inversion unit B65, a multiplier B31, adders B32-B34, B66 and B67, and dividers B35, B36.

The target vehicle drive force basic value calculation unit B61 calculates a target vehicle drive force basic value $tFwB$ by looking up a pre-stored map based on the vehicle speed $VSP$ input from the TCU 6 and the accelerator pedal depression amount $APS$ detected by the accelerator pedal depression amount sensor 18. The value for the target vehicle drive force basic value $tFwB$ in this map increases as the accelerator pedal depression amount $APS$ increases or as the vehicle speed $VSP$ decreases. Furthermore when the accelerator pedal depression amount $APS$ is zero and the vehicle speed $VSP$ is substantially not zero, the target vehicle drive force basic value $tFwB$ takes a negative value. Consequently, the value of the target vehicle drive force basic value $tFwB$ takes a negative value when the vehicle is accelerating due to gravity by coasting on a downwardly sloping road surface.

The accelerator pedal depression amount $APS$, the vehicle speed $VSP$ and the variation in the vehicle speed $\Delta VSP$ are input to the target vehicle drive force correction basic value calculation unit B62. The variation $\Delta VSP$ in the vehicle speed is calculated by the adder B66 which adds the negative output of the sign inversion unit B65 and the storage unit B64 to the vehicle speed $VSP$. The storage unit B64 stores the immediately previous value for the vehicle speed $VSP(z^{-1})$ input on the immediately previous calculation cycle. In the following description the suffix (Z-1) denotes a previous value.

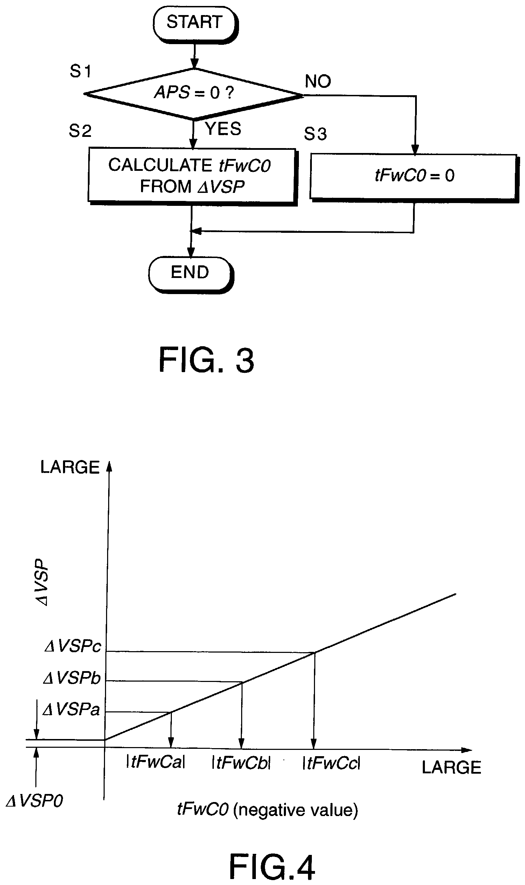

The calculation of the target drive force correction basic value $tFwC0$ by the target vehicle drive force correction basic value calculation unit B62 can be expressed as the calculation routine shown in FIG. 3 executed by the comprehensive control unit 7. This routine is executed iteratively at an interval of ten milliseconds while the vehicle is operating as described above referring to FIG. 2.

Referring to FIG. 3, firstly in a step S1, the CCU 7 determines whether or not the accelerator pedal depression amount $APS$ is zero.

When the accelerator pedal depression amount $APS$ is not zero, in a step S3, the CCU 7 sets the target drive force correction basic value $tFwC0$ calculates a target drive force correction basic value $tFwC0$ to a value of zero. When the accelerator pedal depression amount $APS$ is zero, the target drive force correction basic value $tFwC0$ is calculated by looking up a pre-stored map with the characteristics as shown in FIG. 4 based on the amount of variation in the vehicle speed $\Delta VSP$.

After the target drive force correction basic value $tFwC0$ is determined in the step S2 or the step S3, the CCU 7 terminates the routine.

Referring again to FIG. 4, the target drive force correction basic value $tFwC0$ is a negative value and takes increasingly large absolute values as the value for the amount of variation in the vehicle speed $\Delta VSP$ increases. When the amount of variation in the vehicle speed $\Delta VSP$ is large, it means that the vehicle speed $VSP$ is increasing. In FIG. 4, the target drive force correction basic value $tFwC0$ takes a value of zero when the amount of variation in the vehicle speed $\Delta VSP$ is less than or equal to a predetermined value $\Delta VSP0$. The symbols $a$, $b$, $c$ applied to $tFwC0$ in the figure express a downward road gradient and display a relationship in which $a < b < c$. The amount of variation in the vehicle speed $\Delta VSP$ increases as the downward gradient increases. In other words, the relationship $0 < \Delta VSPa < \Delta VSPb < \Delta VSPc$ is established. According to this relationship, the absolute value for the target drive force correction basic value $tFwC0$ increases as the downward road gradient increases.

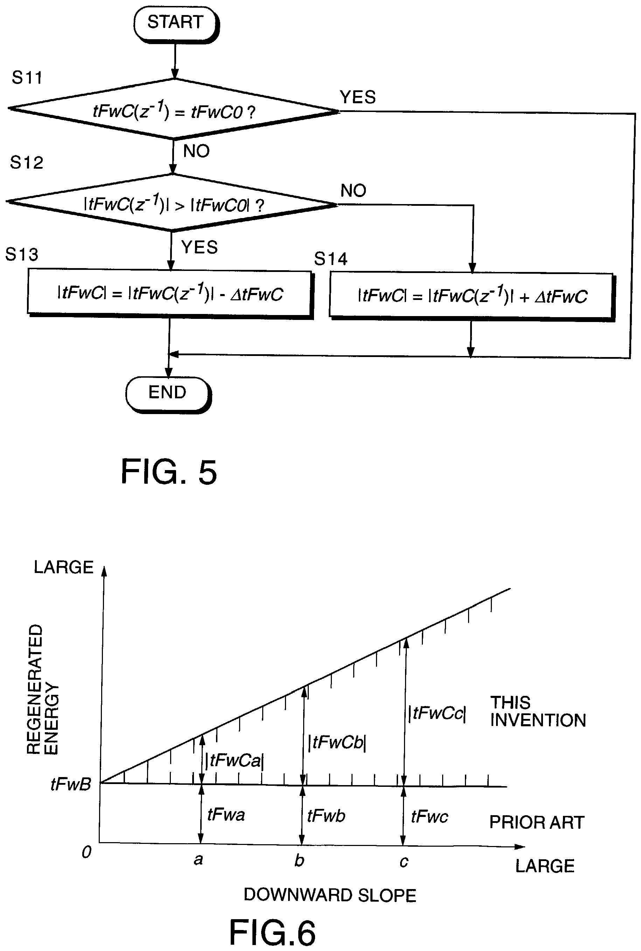

The target vehicle drive force correction value calculation unit 63 applies a smoothing process to the target drive force correction basic value $tFwC0$ in order to calculate a target drive force correction value $tFwC$. This process can be expressed as the calculation routine shown in FIG. 5 executed by the CCU 7. As described above referring to FIG. 2, this routine is performed iteratively at an interval of ten milliseconds while the vehicle is operating.

Firstly in a step S11, the CCU 7 determines whether or not the target drive force correction value $tFwC(z^{-1})$ calculated on the immediately previous occasion the routine was performed is equal to the target drive force correction basic value $tFwC0$ calculated on the current occasion the routine is performed as shown in FIG. 3. When $tFwC(z^{-1})$ is equal to $tFwC0$, the routine is immediately terminated without proceeding to subsequent steps.

When $tFwC(z^{-1})$ is not equal to $tFwC0$, the routine proceeds to a step in which the CCU 7 determines whether or not $|tFwC(z^{-1})|$ is greater than $|tFwC0|$. Since both the target drive force correction value $tFwC$ and the target drive force correction basic value $tFwC0$ are negative values, the absolute values thereof are compared.

When $|tFwC(z^{-1})|$ is greater than $|tFwC0|$, the routine proceeds to a step S13 and the CCU 7 subtracts a predetermined correction $\Delta tFwC$ from the previous value for $|tFwC(z^{-1})|$ and sets the resulting value as the target drive force correction value $|tFwC|$.

When $|tFwC(z^{-1})|$ is not greater than $|tFwC0|$, the routine proceeds to a step S14 and the CCU 7 adds the

predetermined correction $\Delta tFwC$ to the previous value for $|tFWC(z^{-1})|$ and sets the resulting value as the target drive force correction value $|tFwC|$.

After the process in the step S13 or the step S14, the routine is terminated.

In this manner, the target drive force $tFw$ can be calculated by the adder B67 adding the calculated target drive force correction value $tFwC$ which is a negative value to the target vehicle drive force basic value $tFwB$ which is a negative value. The units for the target vehicle drive force $tFw$ are newtons (N).

Since the target vehicle drive force basic value $tFwB$ is corrected by the target drive force correction basic value $tFwC0$ set with respect to the gradient, the absolute value of the negative value for the target vehicle drive force $tFw$ increases as the downward gradient increases. This means that the power generation load on the motor 4 which performs regenerative braking operations increases as the absolute value for the negative value comprising the target vehicle drive force increases.

The prior-art technique determined the target vehicle drive force depending only on the accelerator pedal depression amount $APS$ and the vehicle speed $VSP$, but the drive force control device according to this invention corrects it according to the downward gradient of the road surface as described above, so the kinetic energy of the vehicle which is increased by the downward gradient can be efficiently utilized for charging the battery 17.

The CCU 7 outputs the calculated target vehicle drive force $tFw$ to the TCU 6. On the other hand, the multiplier B31 calculates a target motor output $tPm$ by multiplying $tFw$ with the vehicle speed $VSP$. The units of the target motor output $tPm$ are kilowatts (Kw) or newton meters/second (N·m/sec).

When the motor 4 is driving the driving wheels, that is to say, during normal operating conditions, the target vehicle drive force basic value $tFwB$ is a positive value and the target drive force correction basic value $tFwC$ takes a value of zero. Thus the target vehicle drive force $tFw$ is also a positive value and the TCU 6 performs normal control of the motor 4 via the inverter 16 to obtain the target vehicle drive force $tFw$.

The motor loss calculation unit B30 of the CCU 7 looks up a map of characteristics as shown in the figure which is pre-stored in the memory using the vehicle speed $VSP$ and the previous value $tFw(z^{-1})$ of the target drive force $tFw$ in order to calculate the motor loss $Lm$. The map is set so that when the vehicle speed $VSP$ is held constant, the motor loss $Lm$ increases as the target vehicle drive force $tFw(z^{-1})$ decreases. When the target vehicle drive force $tFw(z^{-1})$ is held constant, the motor loss $Lm$ increases as the vehicle speed $VSP$ decreases.

The generator loss calculation unit B40 of the CCU 7 looks up a map having characteristics shown in the figure which is pre-stored in the memory on the basis of the engine rotation speed $Ng$ and the previous value $tTe(z^{-1})$ of the engine target output torque $tTe$ in order to calculate the generator loss $Lg$. The map is set so that when the engine rotation speed $Ng$ is held constant, the generator loss $Lg$ increases as the previous value $tTe(z^{-1})$ of the engine target output torque decreases. When the previous value $tTe(z^{-1})$ of the engine target output torque is held constant, the generator loss $Lg$ increases as the engine rotation speed $Ng$ decreases.

The adder B32 of the CCU 7 adds the generator loss $Lg$ and the adder B33 adds the motor loss $Lm$ respectively to the target motor output $tPm$.

A target generator output $tPg$ is calculated by adding a correction $tPb$ in response to the state of charge of the battery to the output of the adder B33 at the adder B34. The correction $tPb$ is set to a value which decreases as the state of charge of the battery increases.

The divider B36 of the CCU 7 calculates the engine target output torque $tTe$ by dividing the target generator output $tPg$ with the engine rotation speed $Ng$, and outputs it to the ECU 2. The units for the engine target output torque $tTe$ are newton meters (N·m).

On the other hand, the engine correction target drive force $tFw2$ is calculated in the divider B35 of the CCU 7 by dividing the target generator output $tPg$ by the vehicle speed $VSP$. The units of the engine correction target drive force $tFw2$ are newtons (N). The resulting value for the engine correction target drive force $tFw2$ is input together with the vehicle speed $VSP$ into the target generator rotation speed calculation unit B50.

The target generator rotation speed calculation unit B50 looks up a map having characteristics shown in the figure which is pre-stored in the memory based on the engine correction target drive force $tFw2$ and the vehicle speed $VSP$ and calculates the target generator rotation speed $tNg$. The map is set so that the target generator rotation speed $tNg$ increases as the vehicle speed $VSP$ increases or as the engine correction target drive force $tFw2$ increases.

The target generator rotation speed calculation unit B50 of the CCU 7 outputs the calculated target generator rotation speed $tNg$ to the TCU 6.

This drive force amount control device is adapted so that when the accelerator pedal depression amount $APS$ is zero, the target drive force correction value $tFwC$ is subtracted from the target vehicle drive force basic value $tFwB$. The target drive force correction value $tFwC$ takes large absolute values as the vehicle speed rate of change $\Delta VSP$ increases as shown in FIG. 4, that is to say, as acceleration increases.

Thus as shown in FIG. 6, at a constant vehicle speed $VSP$ and accelerator pedal depression amount $APS$ (=0), a target drive force correction basic value $tFwCc$ on a sharp downward gradient c takes a larger absolute value than a target drive force correction basic value $tFwCa$ on a gentle downward gradient a. The target drive force correction basic value *tFwC* is a negative value which is added to the target vehicle drive force basic value *tFwB* by the adder B67 in order to calculate the target vehicle drive force *tFw.* Thus the absolute value of the target vehicle drive force *tFw* increases as the downward gradient increases.

As a result, the power generation load on the motor 4 increases as the downward slope increases and thus increases the regenerative braking operation of the motor 4. Furthermore the power generation amount of the motor 4 increases and the charge to the battery 17 also increases.

In contrast, the conventional technique as disclosed in Tokkai 2000-236602 determines the target vehicle drive force *tFw* without reference to the gradient of the road surface. Consequently the same value is used for the target vehicle drive force *tFwa* on a gentle downward gradient *a*, the target vehicle drive force *tFwb* on a median downward gradient *b* and the target vehicle drive force *tFwc* on a sharply downward slope c. Thus the energy component produced by the downward slope which is greater than the fixed energy amount can not be regenerated as energy for charging the battery. Furthermore since the operation of regenerative braking is fixed irrespective of the gradient, the vehicle tends to gradually accelerate as the downward slope increases.

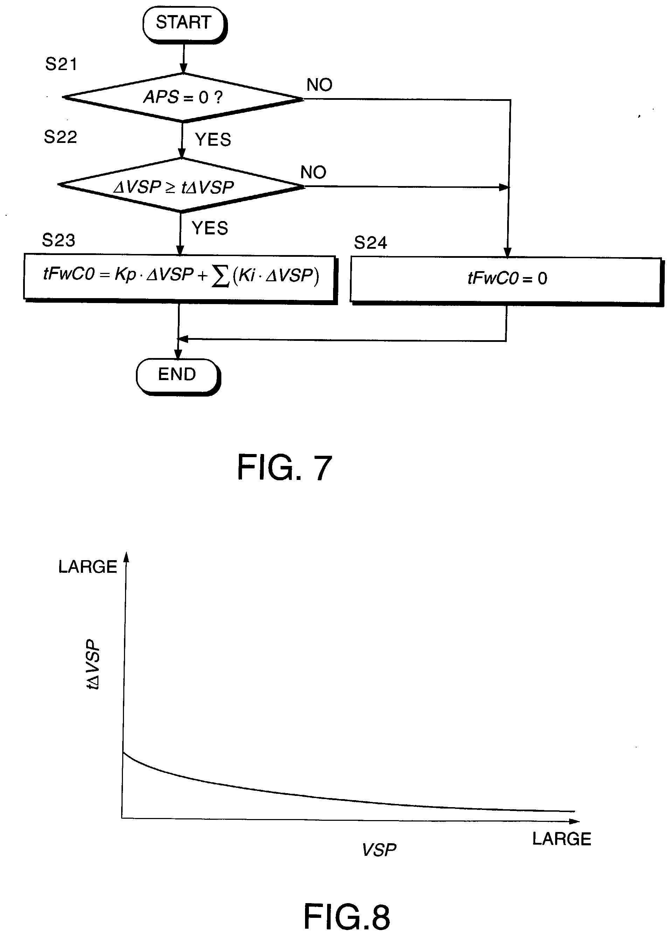

Next referring to FIGs. 7 and 8, a second embodiment of this invention will be described.

This embodiment is related to the calculation process for the target drive force correction basic value *tFwC0* executed by the target vehicle drive force correction basic value calculation unit B62 shown in FIG. 2.

In the first embodiment, the target vehicle drive force correction basic value is determined in the routine shown in FIG. 3 using the map of FIG. 4. However in this embodiment, the calculation unit B62 of the CCU 7 determines the value using the routine shown in FIG. 7.

Referring to FIG. 7, the CCU 7 firstly in a step S21 determines whether or not the accelerator pedal depression amount *APS* has a value of zero.

When the accelerator pedal depression amount *APS* does not have a value of zero, the CCU 7 set the target drive force correction basic value *tFwC0* to zero in a step S24.

When accelerator pedal depression amount *APS* has a value of zero, the CCU 7 compares the variation *ΔVSP* in the vehicle speed with a predetermined variation *tΔVSP* in a step S22. Herein the predetermined variation *tΔVSP* has a value approximately equal to zero. When the variation in the vehicle speed *ΔVSP* is smaller than the predetermined variation *tΔVSP,* the target drive force correction basic value *tFwC0* is set to zero in a step S24.

When the variation in the vehicle speed *ΔVSP* is not smaller than the predetermined variation *tΔVSP,* the CCU 7 sets the target drive force correction basic value *tFwC0* using Equation (1) in a step S23.

$$tFwC0 = Kp \cdot \Delta VSP + \sum \left( Ki \cdot \Delta VSP \right) \qquad (1)$$

where, *Kp, Ki* = constants.

Equation (1) corresponds to known proportional integral control in which *Kp* is a proportional constant and *Ki* in an integral constant. The term $\sum (Ki \cdot \Delta VSP)$ in Equation (1) means that *Ki ΔVSP* are added on each occasion the step S23 is executed.

That is to say, when the conditions in the step S22 are satisfied for the first time, the target drive force correction basic value *tFwC0* is set equal to *Kp ΔVSP* which is a differential term. When the routine is performed on a subsequent occasion and the conditions in the step S22 are satisfied, *Ki ΔVSP* which is an integral term are added to the target drive force correction basic value *tFwC0.* Thereafter the integral term *Ki ΔVSP* is summed up on each occasion the conditions in the step S22 are satisfied.

In other words, as long as the variation in the vehicle speed *ΔVSP* is greater than the predetermined variation *tΔVSP,* the target drive force correction basic value *tFwC0* continues to increase at a rate corresponding to the integral term *Ki ΔVSP.* When the variation in the vehicle speed *ΔVSP* becomes less than the predetermined variation *tΔVSP,* the target drive force correction basic value *tFwC0* takes a value of zero.

After the CCU 7 sets the target drive force correction basic value *tFwC0* in the step S23 or the step S24, the routine is terminated.

On a downward slope, this routine allows the variation in the vehicle speed *ΔVSP* to converge towards the predetermined variation *tΔVSP* irrespective of the gradient of the slope. As a result, the acceleration of the vehicle on a downward slope is substantially fixed irrespective of the gradient.

In this embodiment, the CCU 7 uses the vehicle speed *VSP* in order to determine the predetermined variation *tΔVSP* by looking up a map having the characteristics shown in FIG. 8 which is pre-stored in the memory.

In the figure, the predetermined variation *tΔVSP* decreases as the vehicle speed *VSP* increases. This is for the following reason.

When a vehicle enters a downward slope at a low speed, the driver will realize beforehand that the vehicle will accelerate. In this case, therefore, the driver will not become concerned even when the vehicle undergoes some acceleration when on the downward slope. Consequently the predetermined variation is set to a relatively large value. On the contrary, when a vehicle enters a downward slope at a high speed, the predetermined variation $t\Delta VSP$ is set to a relatively small value in order to prioritize the prevention of vehicle acceleration on the downward slope. This variable setting allows vehicle behavior on the downward slope to reflect the driver's perceptions while maintaining regeneration of energy. However as clearly shown in FIG. 8, the predetermined variation $t\Delta VSP$ varies in a range which is close to a value of zero.

Although the invention has been described above by reference to certain embodiments of the invention, the invention is not limited to the embodiments described above. Modifications and variations of the embodiments described above will occur to those skilled in the art, in light of the above teachings.

For example, the predetermined variation $t\Delta VSP$ is determined according to the vehicle speed $VSP$ in the second embodiment, but it is also possible to set the predetermined variation $t\Delta VSP$ as a fixed value.

The embodiments of this invention in which an exclusive property or privilege is claimed are defined as follows:

## Claims

1. A control method of a motor (4) provided in a vehicle for driving the vehicle and rendering a braking effect by performing power generation using a kinetic energy of the vehicle, comprising:

    detecting a depression amount (APS) of an accelerator pedal provided in the vehicle (18);
    detecting a vehicle running speed (VSP) (6); and
    controlling the motor (4) according to a target vehicle drive force (tFw) calculated on the bases of the depression amount (APS) and the vehicle speed (VSP);
    **characterized by**:

    calculating a target vehicle drive force basic value (tFwB) on the basis of the depression amount (APS) and the vehicle speed (VSP) (B61);
    calculating a correction amount (tFwC) on the basis of a variation ($\Delta VSP$) in the vehicle running speed (VSP) when the depression amount (APS) is zero (B62, B63, S2, S13, S14); and
    calculating the the target vehicle drive force (tFw) by adding the correction amount (tFwC) to the target vehicle drive force basic value (tFwB) (B67);

    wherein the correction amount (tFwC) is a value of zero when the variation ($\Delta VSP$) is smaller than a predetermined variation ($t\Delta VSP$) whereas the correction amount (tFwC) takes a negative value, an absolute value of which increases as the variation ($\Delta VSP$) increases, when the variation ($\Delta VSP$) is not smaller than the predetermined variation ($t\Delta VSP$); and
    the predetermined variation ($t\Delta VSP$) is a value that decreases as the vehicle speed (VSP) increases.

2. The control method as defined in Claim 1, wherein the control method further comprises
    detecting a depression amount of an accelerator pedal provided in the vehicle (18),
    setting a target vehicle drive force basic value based on the vehicle running speed and the accelerator pedal depression amount (B61),
    calculating a target drive force correction based on the amount of variation in the vehicle running speed (B62, B63, S2, B23, S24), and
    controlling the power generation load on the generator (4) based on the target vehicle drive force in which the target vehicle drive force basic value is corrected by the target drive force correction (B67),

3. The control method as defined in Claim 2, wherein the control method further comprises setting the target drive force correction to a value of zero when the accelerator depression amount is not zero (S1, S3, S21, S24).

4. The Control method aS defined in Claim 2 Or Claim 3, wherein the control method further comprises
    placing the target drive force correction to a value of zero when the amount of variation in the vehicle running speed is less than a predetermined amount (S2, S22, S24), and
    setting the target drive force correction so that the power generation load on the generator (4) increases as the amount of variation in the vehicle running speed increases from the predetermined amount (S2, S22, S24).

5. The control method as defined in any one of Claim 2 through Claim 4, wherein the control method further comprises feedback controlling the correction so that the amount of variation in the vehicle running speed coincides with a predetermined target amount (S23).

6. The control method as defined in Claim 5, wherein the control method further comprises setting the target amount to a smaller value as the vehicle running speed increases.

7. The control method as defined in any one of Claim 2 through Claim 6, wherein
the generator (4) comprises a motor/generator which is engaged with a drive wheel of the vehicle and is controlled by an inverter (16), and
the control method further comprises
controlling the inverter (16) to cause the motor/generator to drive the drive wheel when the target vehicle drive force is a positive value, and to cause the motor/generator to render a braking effect on the drive wheel by performing power generation using a rotational energy of the drive wheel, when the target vehicle drive force is a negative value.

8. A control device for a motor (4) provided in a vehicle for driving the vehicle and rendering a braking effect by performing power generation using a kinetic energy of the vehicle, comprising:

   a sensor (18) detecting a depression amount (APS) of an accelerator pedal provided in the vehicle (18);
   a sensor (6) detecting a vehicle running speed (6); and
   a programmable controller (6, 7) programmed to control the the motor (4) according to a target vehicle drive force (tFw) calculated on the bases of the depression amount (APS) and the vehicle speed (VSP),
   **characterized in that** the controller (6, 7) is further programmed to:

      calculate a target vehicle drive force basic value (tFwB) on the basis of the depression amount (APS) and the vehicle speed (VSP) (B61);
      calculate a correction amount (tFwC) on the basis of a variation ($\Delta$VSP) in the vehicle running speed (VSP) when the depression amount (APS) is zero (B62, B63, S2, S13, S14); and
      calculate the the target vehicle drive force (tFw) by adding the correction amount (tFwC) to the target vehicle drive force basic value (tFwB) (B67);

   wherein the correction amount (tFwC) is a value of zero when the variation ($\Delta$VSP) is smaller than a predetermined variation (t$\Delta$VSP) whereas the correction amount (tFwC) takes a negative value, an absolute value of which increases as the variation ($\Delta$VSP) increases, when the variation ($\Delta$VSP) is not smaller than the predetermined variation (t$\Delta$VSP); and
   the predetermined variation (t$\Delta$VSP) is a value that decreases as the vehicle speed (VSP) increases.

## Patentansprüche

1. Steuerverfahren für einen Motor (4), der in einem Fahrzeug zum Antreiben des Fahrzeugs und zum Erzeugen einer Bremswirkung durch Ausführen einer Energieerzeugung unter Verwendung einer kinetischen Energie des Fahrzeugs vorgesehen ist, umfassend:

   Erfassen eines Niederdrückbetrags (APS) eines Gaspedals, das im Fahrzeug (18) vorgesehen ist;
   Erfassen einer Fahrzeugfahrgeschwindigkeit (VSP) (6); und
   Steuern des Motors (4) gemäß einer Soll-Fahrzeugantriebskraft (tFw), die basierend auf dem Niederdrückbetrag (APS) und der Fahrzeuggeschwindigkeit (VSP) berechnet wird;
   **gekennzeichnet durch**:

      Berechnen eines Soll-Fahrzeugantriebskraft-Basiswerts (tFwB) basierend auf dem Niederdrückbetrag (APS) und der Fahrzeuggeschwindigkeit (VSP) (B61);
      Berechnen eines Korrekturbetrags (tFwC) basierend auf einer Veränderung ($\Delta$VSP) in der Fahrzeugfahrgeschwindigkeit (VSP), wenn der Niederdrückbetrag (APS) Null ist (B62, B63, S2, S13, S14); und
      Berechnen der Soll-Fahrzeugantriebskraft (tFw) durch Addieren des Korrekturbetrags (tFwC) zum Ziel-Fahrzeugantriebskraft-Basiswert (tFwB) (B67);

   wobei der Korrekturbetrag (tFwC) ein Wert von Null ist, wenn die Veränderung ($\Delta$VSP) kleiner als eine vorgegebene Veränderung (T$\Delta$VSP) ist, während der Korrekturbetrag (tFwC) einen negativen Wert annimmt, dessen absoluter Wert sich mit der Veränderung (ΔVSP) erhöht, wenn die Veränderung (ΔVSP) nicht kleiner als die vorgegebene Veränderung (TΔVSP) ist; und

die vorgegebene Veränderung (TΔVSP) ein Wert ist, der abnimmt, wenn die Fahrzeuggeschwindigkeit (VSP) ansteigt.

2. Steuerverfahren nach Anspruch 1, wobei das Steuerverfahren ferner umfasst
Erfassen eines Niederdrückbetrags eines Gaspedals, das im Fahrzeug (18) vorgesehen ist,
Einstellen eines Soll-Fahrzeugantriebskraft-Basiswerts basierend auf der Fahrzeugfahrgeschwindigkeit und dem Gaspedalniederdrückbetrag (B61),
Berechnen einer Soll-Antriebskraftkorrektur basierend auf dem Betrag einer Veränderung der Fahrzeugfahrgeschwindigkeit (B62, B63, S2, B23, S24) und
Steuern der Energieerzeugungslast am Generator (4) basierend auf der Soll-Fahrzeugantriebskraft, in welcher der Soll-Fahrzeugantriebskraft-Basiswert durch die Soll-Antriebskraftkorrektur korrigiert wird (B67).

3. Steuerverfahren nach Anspruch 2, wobei das Steuerverfahren ferner das Einstellen der Soll-Antriebskraftkorrektur auf einen Wert von Null umfasst, wenn der Gaspedalniederdrückbetrag nicht Null ist (S1, S3, S21, S24).

4. Steuerverfahren nach Anspruch 2 oder Anspruch 3, wobei das Steuerverfahren ferner umfasst
Setzen der Soll-Antriebskraftkorrektur auf einen Wert von Null, wenn der Betrag der Veränderung der Fahrzeugfahrgeschwindigkeit kleiner als ein vorgegebener Betrag ist (S2, S22, S24) und
Einstellen der Soll-Antriebskraftkorrektur derart, dass die Energieerzeugungslast am Generator (4) ansteigt, wenn sich der Betrag der Veränderung der Fahrzeugfahrgeschwindigkeit vom vorgegebenen Betrag erhöht (S2, S22, S24).

5. Steuerverfahren nach einem der Ansprüche 2 bis 4, wobei das Steuerverfahren ferner eine Rückkopplungssteuerung der Korrektur umfasst, sodass die Größe der Veränderung der
Fahrzeugfahrgeschwindigkeit mit einem vorgegebenen Sollbetrag übereinstimmt (S23).

6. Steuerverfahren nach Anspruch 5, wobei das Steuerverfahren ferner das Einstellen des Sollbetrags auf einen kleineren Wert umfasst, wenn die Fahrzeugfahrgeschwindigkeit zunimmt.

7. Steuerverfahren nach einem der Ansprüche 2 bis Anspruch 6, wobei
der Generator (4) einen Motor/Generator umfasst, der mit einem Antriebsrad des Fahrzeugs in Eingriff steht und von einem Inverter (16) gesteuert wird, und
das Steuerverfahren ferner umfasst
Steuern des Inverters (16), um zu bewirken, dass der Motor/Generator das Antriebsrad antreibt, wenn die Soll-Fahrzeugantriebskraft ein positiver Wert ist, und zu bewirken, dass der Motor/Generator eine Bremswirkung am Antriebsrad durch Ausführen einer Leistungserzeugung unter Verwendung einer Rotationsenergie des Antriebsrads erzeugt, wenn die Soll-Fahrzeugantriebskraft ein negativer Wert ist.

8. Steuervorrichtung für einen Motor (4), der in einem Fahrzeug zum Antreiben des Fahrzeugs vorgesehen ist und eine Bremswirkung durch Ausführen einer Energieerzeugung unter Verwendung einer kinetischen Energie des Fahrzeugs erzeugt, umfassend:

einen Sensor (18), der einen Niederdrückbetrag (APS) eines Gaspedals erfasst, das in dem Fahrzeug (18) vorgesehen ist;
einen Sensor (6) zum Erfassen einer Fahrzeugfahrgeschwindigkeit (6); und
eine programmierbare Steuerung (6, 7), die so programmiert ist, dass sie den Motor (4) gemäß einer Soll-Fahrzeugantriebskraft (tFw) steuert, die basierend auf dem Niederdrückbetrag (APS) und der Fahrzeuggeschwindigkeit (VSP) berechnet wird,
**dadurch gekennzeichnet, dass** die Steuerung (6, 7) ferner programmiert ist zum:

Berechnen eines Soll-Fahrzeugantriebskraft-Basiswerts (tFwB) basierend auf dem Niederdrückbetrag (APS) und der Fahrzeuggeschwindigkeit (VSP) (B61);
Berechnen eines Korrekturbetrags (tFwC) basierend auf einer Veränderung (ΔVSP) in der Fahrzeugfahrgeschwindigkeit (VSP), wenn der Niederdrückbetrag (APS) Null ist (B62, B63, S2, S13, S14); und
Berechnen der Soll-Fahrzeugantriebskraft (tFw) durch Addieren des Korrekturbetrags (tFwC) zum Soll-Fahrzeugantriebskraft-Basiswert (tFwB) (B67);

wobei der Korrekturbetrag (tFwC) ein Wert von Null ist, wenn die Veränderung (ΔVSP) kleiner als eine vorgegebene Veränderung (tΔVSP) ist, während der Korrekturbetrag (tFwC) einen negativen Wert annimmt, dessen absoluter Wert mit der Veränderung (ΔVSP) erhöht, wenn die Variation (ΔVSP) nicht kleiner als die vorgegebene Veränderung (tΔVSP) ist; und

die vorgegebene Veränderung (tΔVSP) ist ein Wert, der abnimmt, wenn die Fahrzeuggeschwindigkeit (VSP) zunimmt.

**Revendications**

1. Procédé de commande d'un moteur (4) prévu dans un véhicule pour propulser le véhicule et fournir un effet de freinage en effectuant une génération de puissance à l'aide d'une énergie cinétique du véhicule, comprenant le fait :

de détecter une quantité d'enfoncement (APS) d'une pédale d'accélérateur prévue dans le véhicule (18) ;
de détecter une vitesse de circulation du véhicule (VSP) (6) ; et
de commander le moteur (4) en fonction d'une force de propulsion cible du véhicule (tFw) calculée sur la base de la quantité d'enfoncement (APS) et de la vitesse du véhicule (VSP) ;
**caractérisé par** le fait :

de calculer une valeur de base de force de propulsion cible du véhicule (tFwB) sur la base de la quantité d'enfoncement (APS) et de la vitesse du véhicule (VSP) (B61) ;
de calculer une quantité de correction (tFwC) sur la base d'une variation (ΔVSP) de la vitesse de circulation du véhicule (VSP) lorsque la quantité d'enfoncement (APS) est nulle (B62, B63, S2, S13, S14) ; et
de calculer la force de propulsion cible du véhicule (tFw) en additionnant la quantité de correction (tFwC) et la valeur de base de force de propulsion cible du véhicule (tFwB) (B67) ;

dans lequel la quantité de correction (tFwC) est une valeur nulle lorsque la variation (ΔVSP) est inférieure à une variation prédéterminée (tΔVSP) alors que la quantité de correction (tFwC) prend une valeur négative, dont une valeur absolue augmente à mesure que la variation (ΔVSP) augmente, lorsque la variation (ΔVSP) n'est pas inférieure à la variation prédéterminée (tΔVSP) ; et
la variation prédéterminée (TΔVSP) est une valeur qui diminue à mesure que la vitesse du véhicule (VSP) augmente.

2. Procédé de commande tel que défini dans la revendication 1, dans lequel le procédé de commande comprend en outre le fait
de détecter une quantité d'enfoncement d'une pédale d'accélérateur prévue dans le véhicule (18),
de régler une valeur de base de force de propulsion cible du véhicule en fonction de la vitesse de circulation du véhicule et de la quantité d'enfoncement de la pédale d'accélérateur (B61),
de calculer une correction de la force de propulsion cible en fonction de la quantité de variation de la vitesse de circulation du véhicule (B62, B63, S2, 823, S24), et
de commander la charge de génération de puissance sur le générateur (4) en fonction de la force de propulsion cible du véhicule dans laquelle la valeur de base de force de propulsion cible du véhicule est corrigée par la correction de force de propulsion cible (B67),

3. Procédé de commande tel que défini dans la revendication 2, dans lequel le procédé de commande comprend en outre le réglage de la correction de force de propulsion cible à une valeur nulle lorsque la quantité d'enfoncement de l'accélérateur n'est pas nulle (S1, S3, S21, S24).

4. Procédé de commande tel que défini dans la revendication 2 ou 3, dans lequel le procédé de commande comprend en outre le fait
de placer la correction de force de propulsion cible à une valeur nulle lorsque la quantité de variation de la vitesse de circulation du véhicule est inférieure à une quantité prédéterminée (S2, S22, S24), et
de régler la correction de force de propulsion cible de sorte que la charge de génération de puissance sur le générateur (4) augmente à mesure que la quantité de variation de la vitesse de circulation du véhicule augmente par rapport à la quantité prédéterminée (S2, S22, S24).

5. Procédé de commande tel que défini dans l'une quelconque des revendications 2 à 4, dans lequel le procédé de commande comprend en outre une rétroaction commandant la correction de sorte que la quantité de variation de la vitesse de circulation du véhicule coïncide avec une quantité cible prédéterminée (S23).

**6.** Procédé de commande tel que défini dans la revendication 5, dans lequel le procédé de commande comprend en outre le réglage de la quantité cible à une valeur plus petite à mesure que la vitesse de circulation du véhicule augmente.

**7.** Procédé de commande tel que défini dans l'une quelconque des revendications 2 à 6, dans lequel
le générateur (4) comprend un moteur/générateur qui est en prise avec une roue motrice du véhicule et est commandé par un onduleur (16), et
le procédé de commande comprend en outre le fait
de commander l'onduleur (16) pour amener le moteur/générateur à propulser la roue motrice lorsque la force de propulsion cible du véhicule est une valeur positive, et amener le moteur/générateur à fournir un effet de freinage sur la roue motrice en effectuant une génération de puissance à l'aide d'une énergie de rotation de la roue motrice, lorsque la force de propulsion cible du véhicule est une valeur négative.

**8.** Dispositif de commande d'un moteur (4) prévu dans un véhicule pour propulser le véhicule et fournir un effet de freinage en effectuant une génération de puissance à l'aide d'une énergie cinétique du véhicule, comprenant :

un capteur (18) détectant une quantité d'enfoncement (APS) d'une pédale d'accélérateur prévue dans le véhicule (18) ;
un capteur (6) détectant une vitesse de circulation du véhicule (6) ; et
un dispositif de commande programmable (6, 7) programmé pour commander le moteur (4) en fonction d'une force de propulsion cible du véhicule (tFw) calculée sur la base de la quantité d'enfoncement (APS) et de la vitesse du véhicule (VSP),
**caractérisé en ce que** le dispositif de commande (6, 7) est en outre programmé :

pour calculer une valeur de base de force de propulsion cible du véhicule (tFwB) sur la base de la quantité d'enfoncement (APS) et de la vitesse du véhicule (VSP) (B61) ;
pour calculer une quantité de correction (tFwC) sur la base d'une variation ($\Delta$VSP) de la vitesse de circulation du véhicule (VSP) lorsque la quantité d'enfncement (APS) est nulle (B62, B63, S2, S13, S14) ; et
pour calculer la force de propulsion cible du véhicule (tFw) en additionnant la quantité de correction (tFwC) à la valeur de base de force de propulsion cible du véhicule (tFwB) (B67) ;

dans lequel la quantité de correction (tFwC) est une valeur nulle lorsque la variation ($\Delta$VSP) est inférieure à une variation prédéterminée (t$\Delta$VSP) alors que la quantité de correction (tFwC) prend une valeur négative, dont une valeur absolue augmente à mesure que la variation ($\Delta$VSP) augmente, lorsque la variation ($\Delta$VSP) n'est pas inférieure à la variation prédéterminée (t$\Delta$VSP) ; et
la variation prédéterminée (T$\Delta$VSP) est une valeur qui diminue à mesure que la vitesse du véhicule (VSP) augmente.

18 ACCELERATOR PEDAL DEPRESSION SENSOR

APS

7 CCU

2 ECU

6 TCU

16 INVERTER

1

THROTTLE OPENING

INTAKE AIR AMOUNT

GENERATOR ROTATION SPEED

MOTOR ROTATION SPEED

Ng

9

10

8

14

15

13 INJECTOR

11

12 SPARK PLUG

4 MOTOR

DRIVE WHEELS

3 GENERATOR

5

9   THROTTLE OPENING SENSOR
10  AIR FLOW METER
11  CRANK ANGLE SENSOR
14  ROTATION SPEED SENSOR
15  ROTATION SPEED SENSOR

FIG.1

FIG.2

B30 MOTOR LOSS CALCULATION UNIT
B40 GENERATOR LOSS CALCULATION UNIT
B50 TARGET GENERATOR ROTATION SPEED
    CALCULATION UNIT
B61 TARGET VEHICLE DRIVE FORCE BASIC VALUE
    CALCULATION UNIT
B62 TARGET VEHICLE DRIVE FORCE CORRECTION
    BASIC VALUE CALCULATION UNIT
B63 TARGET VEHICLE DRIVE FORCE CORRECTION
    CALCULATION UNIT
B64 STORAGE UNIT
B65 SIGN INVERSION UNIT

EP 1 316 464 B1

START

S1 → APS = 0 ?  → NO

S2 → YES

CALCULATE *tFwC0*
FROM Δ*VSP*

S3

*tFwC0* = 0

END

# FIG. 3

LARGE

Δ*VSP*

Δ*VSPc*

Δ*VSPb*

Δ*VSPa*

|*tFwCa*|  |*tFwCb*|  |*tFwCc*|  LARGE

Δ*VSP0*

*tFwC0* (negative value)

# FIG.4

START

S11

$tFwC(z^{-1}) = tFwC0$ ?    YES

NO

S12

$|tFwC(z^{-1})| > |tFwC0|$ ?    NO

YES

S13

$|tFwC| = |tFwC(z^{-1})| - \Delta tFwC$

S14

$|tFwC| = |tFwC(z^{-1})| + \Delta tFwC$

END

## FIG. 5

LARGE

REGENERATED ENERGY

$|tFwCc|$    THIS INVENTION

$|tFwCb|$

$|tFwCa|$

$tFwB$

$tFwa$    $tFwb$    $tFwc$    PRIOR ART

0    $a$    $b$    $c$    LARGE

DOWNWARD SLOPE

## FIG.6

S21

START

APS = 0 ?  →  NO

S22   YES

$\Delta VSP \geq t\Delta VSP$  →  NO

S23   YES

S24

$tFwC0 = Kp \cdot \Delta VSP + \sum (Ki \cdot \Delta VSP)$

$tFwC0 = 0$

END

# FIG. 7

LARGE

$t\Delta VSP$

VSP   LARGE

# FIG.8

**EP 1 316 464 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5615933 A